Europäisches Patentamt

European Patent Office

Office européen des brevets

(19)

(11) Veröffentlichungsnummer: **0 296 537**
**A2**

(12) **EUROPÄISCHE PATENTANMELDUNG**

(21) Anmeldenummer: **88109863.6**

(22) Anmeldetag: **21.06.88**

(51) Int. Cl.⁴: **F16G 11/04**

(30) Priorität: **22.06.87 DE 8708661 U**

(43) Veröffentlichungstag der Anmeldung:
**28.12.88 Patentblatt 88/52**

(84) Benannte Vertragsstaaten:
**AT BE ES FR GB IT NL SE**

(71) Anmelder: **Lacrex Brevetti S.A.**
**Via Eco 53**
**CH-6644 Orselina/TI(CH)**

(72) Erfinder: **Pasbrig, Max**
**Via Eco / Case Luce**
**CH-6644 Orselina(CH)**

(74) Vertreter: **Büchel, Kurt F., Dr.**
**Patentanwalt Dr. Kurt F. Büchel Bergstrasse**
**297**
**FL-9495 Triesen(LI)**

(54) **Vorrichtung zum lösbaren Klemmen, Nachspannen und Sichern von Seilen, Kabeln, Drähten, Riemen od. dgl.**

(57) Die Erfindung betrifft eine Vorrichtung zum lösbaren Klemmen, Nachspannen und Sichern von Seilen, Kabeln, Drähten, Riemen od. dgl., mit einem axial verschiebbaren, selbstklemmenden federbelasteten Klemmkörper (5,9,45), mit einer Schrägbohrung im Gehäuse (1), die in eine Längsbohrung einmündet. Der Klemmkörper (5,9,45) weist an gegenüberliegenden Seiten je einen Achsfortsatz (6,9') auf. Im Gehäuse (1) sind gegenüberliegende Führungsschlitze (27, 20) zur Führung dieser Achsfortsätze (6,9') ausgebildet. Die Enden der Achsfortsätze (6,9') bilden über das Gehäuse (1) hinausstehende Handhaben. Trotz verstärkter Klemmwirkung ist die Führung und Lösbarkeit des Klemmkörpers (5,9,45) verbessert.

**Fig. 3**

EP 0 296 537 A2

## Vorrichtung zum lösbaren Klemmen, Nachspannen und Sichern von Seilen, Kabeln, Drähten, Riemen od.dgl.

Die Erfindung betrifft eine Vorrichtung zum lösbaren Klemmen, Nachspannen und Sichern von Seilen, Kabeln, Drähten, Riemen od.dgl. gemäß dem Oberbegriff des Schutzanspruches 1.

Bei einer bekannten Vorrichtung zum lösbaren Befestigen eines unter Zug stehenden Kabels dieser Art (DE-PS 1266384) ist in einer dickwandigen Hülse mit einer Innenbohrung ein durch eine Schraubenfeder gegen das verengte Ende der Hülse gedrückter Klemmkörper axial verschiebbar gehalten, so daß dieser ein über eine Stirnöffnung in die Hülse eingeführtes Kabel selbstsperrend in der Bohrung verklemmt. Die Schraubenfeder ist hierbei in Richtung auf den Klemmkörper konisch ausgebildet. In der Hülse ist eine weitere Bohrung für ein müheloses Einführen und Nachspannen des Kabels in günstiger Schräglage zur Innenbohrung vorgesehen und ferner dient ein durch die Hülse hindurchgreifender Griffhebel zum Betätigen des Klemmkörpers. Dieser Griffhebel besteht dabei aus einem winkelförmig abgebogenen Drahtstück, das an einem rückwärtigen Fortsatz des Klemmkörpers angreift. Da dieser im Querschnitt kreisrunde bzw. halbkugelförmige Klemmkörper der ebenfalls kreisrunden Bohrung angepaßt ist, gewährleistet dieser Griffhebel meist eine ausreichende Führung des Klemmkör pers. Ein kreisrunder Klemmkörper hat aber den Nachteil, daß er nur mit seiner verhältnismäßig kleinen Umfangsrundung mit dem zu verklemmenden Seil in Kontakt tritt und der Federdruck dann unter Umständen nicht für eine gesicherte Verklemmung ausreicht. Andererseits kann ein leicht verformbares Seil wiederum so stark eingeklemmt werden, daß es mit dem bekannten Griffhebel nur sehr schwierig aus dieser Klemmstellung gelöst werden kann. Bei einer anderen Vorrichtung zur lösbaren Befestigung eines Kabels (DE-PS 1 302 092) ist der Klemmkörper eine an ihrem Umfang gerändelte Rolle, die in einem verschiebbaren Lagerteil sitzt, das mit einer Handhabe bewegt werden kann. Die Bohrung ist zur Aufnahme des Klemmkörpers diesem nachgebildet. Die Schraubenfeder greift hierbei an dem verschiebbaren Lagerteil an. Die Rolle verhindert zwar ungünstige Klemmstellungen weitgehend, jedoch kann auch mit der bekannten Handhabe die Verklemmung nicht immer rasch und ohne besonderen Kraftaufwand gelöst werden.

Der Erfindung liegt nun die Aufgabe zugrunde, bei einer Klemmvorrichtung der eingangs genannten Art auch bei verstärkter Klemmwirkung die Führung sowie die Lösbarkeit des Klemmkörpers zu verbessern und zu erleichtern.

Diese Aufgabe wird mit einer Vorrichtung gemäß dem Oberbegriff des Schutzanspruches 1 erfindungsgemäß durch die Kennzeichnungsmerkmale dieses Anspruches gelöst.

Vorteilhafte Weiterentwicklungen der Erfindung sind in Unteransprüchen beansprucht.

Durch die Ausrüstung eines Klemmkörpers mit in der Hülse geführten und seitlich darüber hinaus vorstehenden Achsfortsätzen wird der Klemmkörper exakt geführt und ein Verkanten insbesondere auch für kreis- oder kugelförmige Klemmkörper verhindert. Die unmittelbar am Klemmkörper angesetzten Achsfortsätze übertragen die zum Lösen der Verklemmung aufgewendete Kraft unmittelbar auf den Klemm körper. Durch den Wegfall von Zwischengliedern wird die Klemmvorrichtung auch vereinfacht, dadurch sicherer und weniger störungsanfällig.

Die Erfindung wird nachfolgend anhand von bevorzugten Ausführungsbeispielen, die auch in der Zeichnung dargestellt sind, näher beschrieben. Es zeigen:

Fig. 1a einen Längsschnitt durch eine erste Klemmvorrichtung,

Fig. 1b eine perspektivische Ansicht eines zugehörigen Klemmkörpers,

Fig. 2a eine Seitenansicht einer weiteren Klemmvorrichtung,

Fig. 2b einen Schnitt durch den vorderen Abschnitt dieser Vorrichtung,

Fig. 3 eine perspektivische Ansicht einer Klemmvorrichtung mit rechteckigem Querschnitt, teilweise aufgeschnitten,

Fig. 4 einen Längsschnitt hierzu,

Fig. 5 einen Schnitt nach der Linie V-V der Fig. 3,

Fig. 6 eine Seitenansicht einer anderen Klemmvorrichtung mit einem seitlichen Einlegeschlitz für das Seil,

Fig. 7 einen Längsschnitt zur Fig. 6,

Fig. 8a einen Längsschnitt durch eine weitere Klemmvorrichtung mit einem kippbar gelagerten Klemmkörper, in Klemmstellung,

Fig. 8b einen Schnitt durch diese Vorrichtung, jedoch in gelöster Klemmstellung,

Fig. 8c eine perspektivische Ansicht dieses Klemmkörpers, vergrößert,

Fig. 9 eine Klemmvorrichtung mit kippbarem Klemmkörper ähnlich Fig. 8a, jedoch mit schräger Seilzuführung,

Fig. 10 eine perspektivische Ansicht einer Klemmvorrichtung mit einer Nachspanneinrichtung und

Fig. 11 eine Klemmvorrichtung für eine geradlinige Seilführung mit zugehöriger Nachspanneinrichtung.

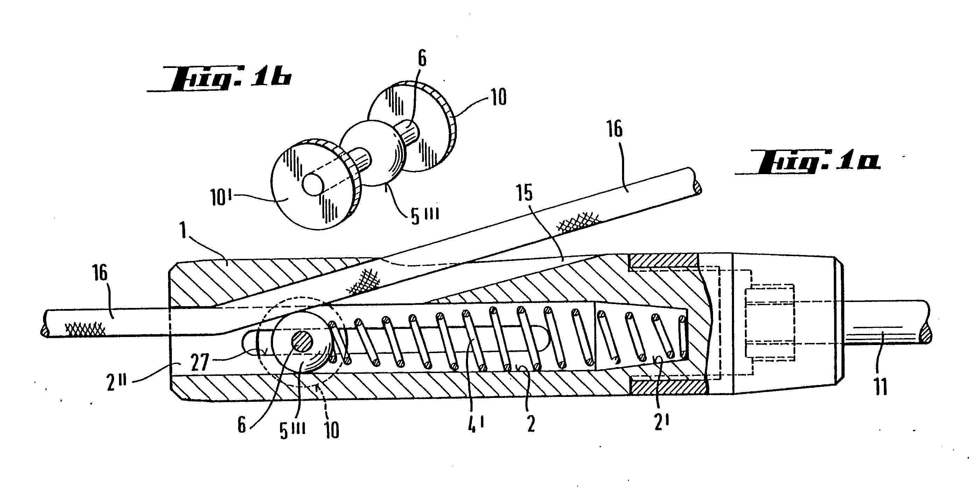

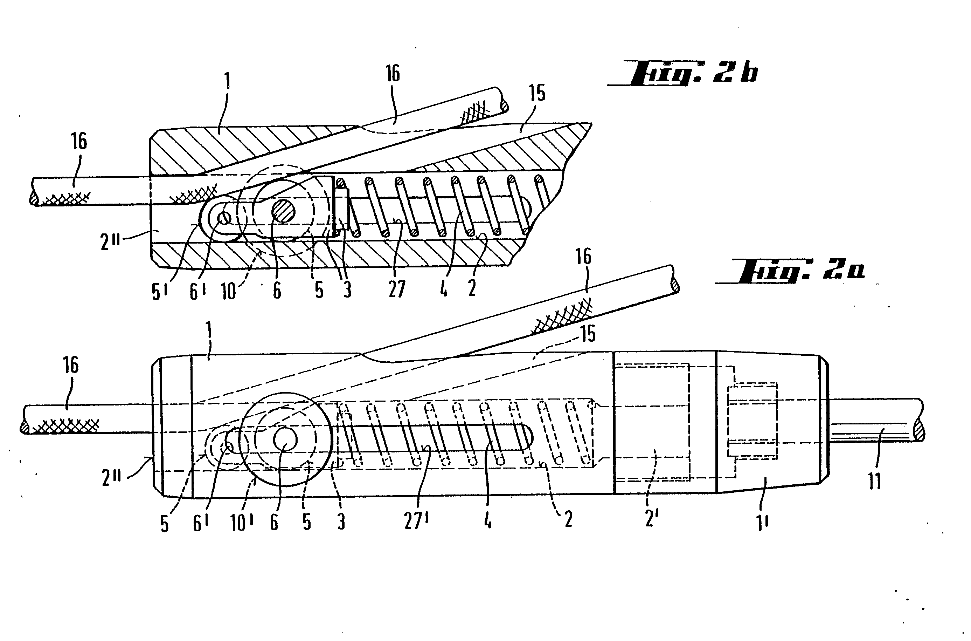

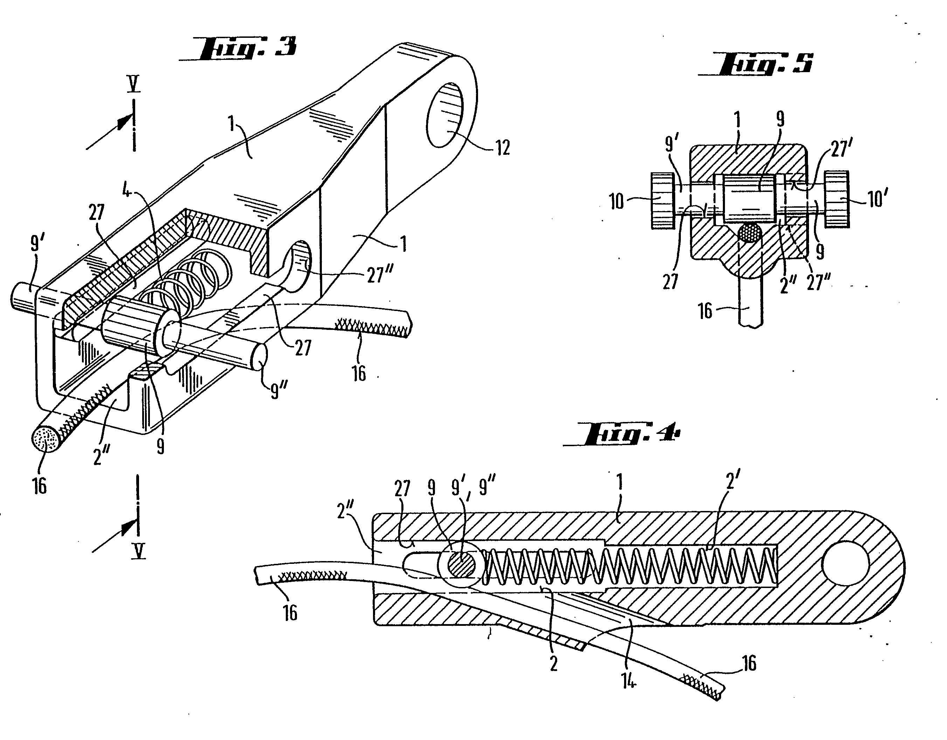

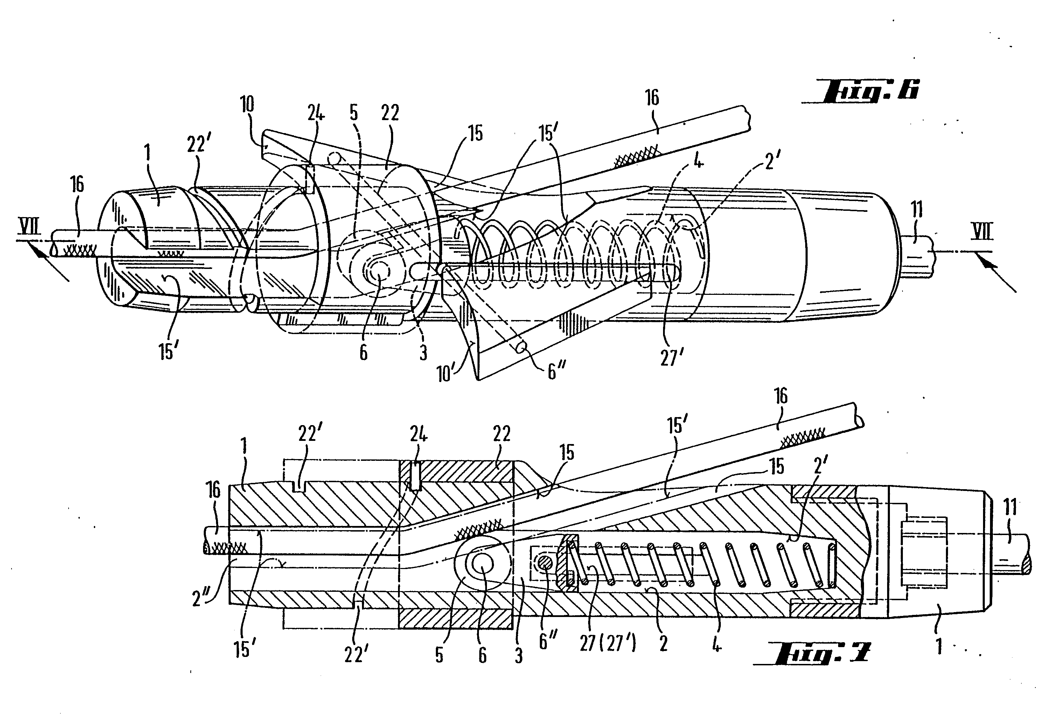

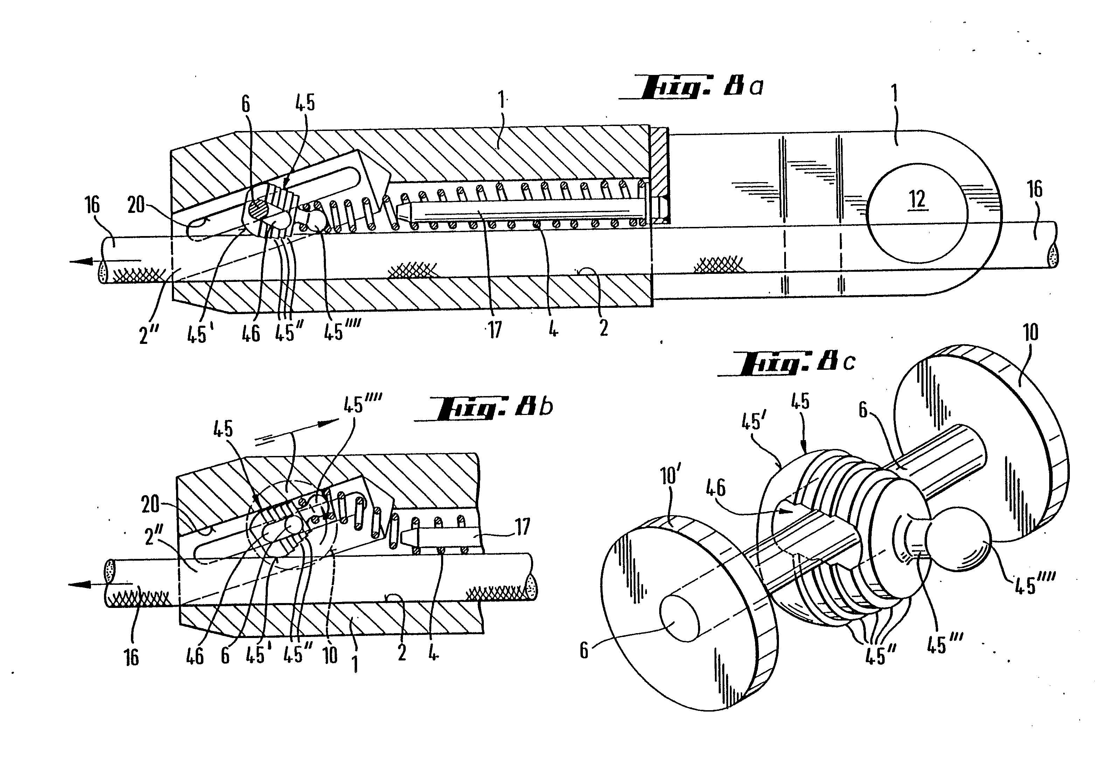

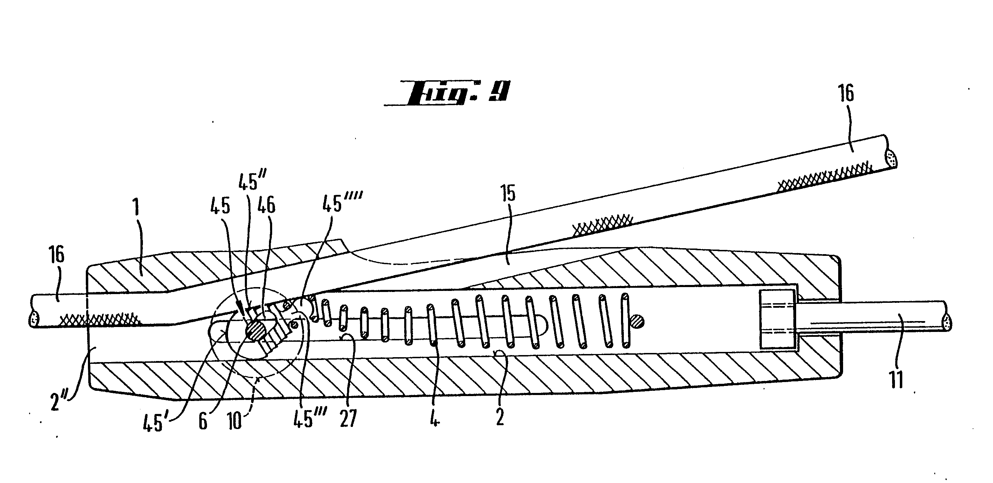

Die in Fig. 1a dargestellte Klemmvorrichtung umfaßt im wesentlichen ein im Querschnitt rundes Gehäuse 1, das am einen Ende mit einem Befestigungsorgan 11, beispielsweise einem Haken, versehen ist. Im länglichen Gehäuse ist eine Längsbohrung 2 ausgebildet, deren inneres Bohrungsende 2' sich konisch verengt und am freien Gehäuseende durch eine Stirnöffnung 2" nach außen offen ist. Eine Schrägbohrung 15 mündet in die Längsbohrung 2 ein. Im Gehäuse sind gegenüberliegende Führungsschlitze 27 parallel zur Bohrungsachse und in Querebene zur Schrägbohrung ausgebildet. In einem Abstand von der Stirnöffnung 2" befindet sich in der Längsbohrung ein beispielsweise kugelförmiger Klemmkörper 5''', der durch seine beidseitigen Achsfortsätze 6 in den Führungsschlitzen 27 geführt ist. Da die Achsfortsätze 6 über das Gehäuse hinausragen, können diese äußeren Fortsatzenden zum Verschieben des Klemkörpers erfaßt werden. Wie aber Fig. 1b zeigt, sind vorteilhaft scheibenförmige Handhaben 10, 10' an diesen Achsfortsätzen angebracht. Am Klemmkörper 5''' greift eine Druckfeder 4' unmittelbar an, deren Federschraube zu ihren beiden Enden hin konisch verengt ist, um auf diese Weise das Zusammendrücken und Entspannen der Feder zu erleichtern. Ein durch den Schrägschlitz geführtes und zu verklemmendes Seil ist mit 16 bezeichnet. Meist wird das Seil 16 durch die Stirnöffnung 2" eingeführt und vom zurückgezogenen Klemmkörper nach oben in die Schrägbohrung 15 umgelenkt. Wird an diesem Ende gezogen, um das Seil zu spannen, dann rollt der Klemmkörper 5''' in der Längsbohrung entgegen der Druckfederwirkung nach hinten. Wird das so gespannte Seil losgelassen, wird der Klemmkörper unter der Druckfederbelastung nach vorne gerollt, wodurch das Seil verklemmt wird. Um den Eintritt der Klemmwirkung zu beschleunigen und zu verstärken, kann der Vorwärtsbewegung des Klemmkörpers in die Klemmstellung noch durch die Handhaben 10 nachgeholfen werden. Soll das Seil aus der Klemmstellung gelöst werden, wird der Klemmkörper über die Handhaben 10 und die Achsfortsätze 6 wieder nach hinten verschoben, bis das Seil genügend frei ist.

Die Klemmvorrichtung gemäß den Fig. 2a und 2b unterscheidet sich von der Vorrichtung gemäß der Fig. 1 im wesentlichen dadurch, daß der Klemmkörper nunmehr aus zwei Klemmelementen, zweckmäßig in Rollenform, besteht, wobei die beiden Klemmelemente 5 bzw. 5' durch ein Lagerteil 3 zusammengefaßt sind, an dem die Druckfeder 4 angreift. Diese Druckfeder 4 ist diesmal zylinderförmig gewunden. Die Achsfortsätze 6 greifen an der Haupt-Klemmrolle 5 an und erstrecken sich, wie in Fig. 1, durch die Führungsschlitze 27, 27' nach außen, wo an den Außenenden wiederum Handhaben 10, 1o' aufgezogen sind. Die Rollen sind mit rauher bzw. gerändelter Oberfläche versehen, welche in das Seil eingreifen, wenn sich der Klemmkörper in Sicherungsstellung befindet. Die Klemmelemente 5, 5' weisen unterschiedlichen Durchmesser auf. Ihre Achsen 6, 6' verlaufen zwar parallel zueinander, jedoch sind sie so versetzt, daß die beiden Rollen auf dem Boden der Längsbohrung abrollen. Ihre Durchmesser sind so aufeinander abgestimmt, daß die Umfangsflächen der beiden Rollen etwa gleichzeitig am zu verklemmenden Seil angreifen und eine verstärkte Klemmung des Seiles bewirken. Da die zusätzliche kleinere Rolle 5' in der Regel vor der größeren am Seil zum Eingriff kommt, wird dadurch jeglicher Schlupf des Seiles verhindert. Der Befestigungshaken 11 ist an diesem Gehäuse 1 über einen Drehkopf 1' verankert.

Die in den Fig. 3 bis 5 gezeigte Klemmvorrichtung weist ein im Querschnitt rechteckiges Gehäuse 1 auf, in dem auch eine im Querschnitt rechteckige oder quadratische Längsausnehmung 2 ausgebildet ist. Der Klemmkörper selbst besteht aus einer Rolle 9 mit gerändelter Umfangsfläche, an der die Druckfeder 4 direkt angreift, die in einer verengten Innenbohrung 2' als Fortsatz der rechteckigen Ausnehmung 2 endet. Die Klemmrolle 9 ist zweckmäßig von einer Breite, die der Breite der Längsausnehmung entspricht, damit die beiden Stirnflächen der Klemmrolle an den Innenwänden der Längsausnehmung anliegen und auf diese Weise ihre Führung gesichert und ein Verkanten weitgehend verhindert ist. Andererseits ist es aber auch möglich, die Klemmrolle 9, wie Fig. 5 zeigt, mit Abstand von den Seitenwänden der Ausnehmung enden zu lassen. Die Achsfortsätze 9' und 9" ragen wiederum über die Längsschlitze 27, 27' hinaus und können, gemäß Fig. 5, wiederum Handhaben 10, 10' tragen. Das zu spannende Seil 16 ist in diesem Fall durch eine nach unten gerichtete Schrägbohrung 14 in die Längsausnehmung geführt.

An dieser Klemmvorrichtung ist auch zu sehen, wie eine mit Achsfortsätzen versehene Rolle oder Kugel in die Längsbohrung 2 eingeführt werden kann. Dazu ist mindestens einer der Führungsschlitze 27 am inneren Ende zu einer Montageöffnung 27", durch die die Rolle oder Kugel durchgesteckt werden kann, erweitert. Eventuell anzubringende Handhaben, wie Griffscheiben, werden nach dem Einsetzen des Klemmkörpers auf die Achsfortsätze aufgesteckt. Eine Befestigungsöse 12 ist am hinteren Ende des Gehäuses ausgebildet.

In den Figuren 6 und 7 ist eine Klemmvorrichtung zu sehen, bei der der rollenförmige Klemmkörper 5 in einem Lagerteil 3 gelagert ist. Die Klemmrolle weist eine konkav vertiefte Umfangsfläche auf, um das seitliche Abrutschen des Seiles zu verhindern. Am Lagerteil greift unmittelbar die Feder 4 an. Ein weiterer Unterschied gegenüber den vorbeschriebenen Klemmvorrichtungen, deren Bezugszeichen auch für diese Ausführungsform gelten, besteht darin, daß die Längs-Schrägbohrung 15 und der das Seil führende Längsbohrungsabschnitt auf einer Seite bis zum Gehäuseäußeren aufgeschlitzt sind und durch diesen Bohrungsschlitz 15' das Seil 16 seitlich eingeschoben werden kann. Diese Klemmvorrichtung kann daher an ein bereits gespanntes bzw. an beiden Enden befestigtes Seil angesetzt werden. Um zu verhindern, daß das Seil durch den offenen Bohrungsschlitz austritt, ist ein Sicherungsring 22 auf dem zylindrischen Gehäuse aufgeschoben und mittels eines Führungsstiftes 24 in einer Gewindenut 22' des Gehäuses geführt. Da dieser Sicherungsring ebenfalls einen Längsschlitz (nicht gezeichnet) aufweist, kann durch ihn das Seil in den Bohrungsschlitz eingelegt werden, wenn er sich in einer vorderen Stellung befindet. Wird der Sicherungsring schließlich zurückgedreht, dann wird der Bohrungsschlitz abgedeckt und das Seil in der Längsbohrung gesichert. Die Achsfortsätze 6″ sind diesmal in dem Lagerteil 3 gelagert und die Handhaben 10, 10' weisen Flügelform auf.

In den Figuren 8a, 8b und 8c ist eine Klemmvorrichtung mit einem Klemmkörper 45 dargestellt, der aus einem etwa halbkugelförmigen Kopf 45', einem stufenförmig abgesetzten Zwischenstück 45″, einem Halsstück 45‴ und einer Endkugel 45⁗ besteht. Die Endkugel ist von der Druckfeder 4 umschlossen, die in üblicher Weise in der Längsbohrung 2 untergebracht und zum Großteil auf einen Haltestift 17 aufgeschoben ist. Zweckmäßig ist diese Feder zur Endkugel hin konisch gewickelt. Der etwa tropfenförmige Klemmkörper 45 ist von einer Längsöse 46 durchsetzt, in der die Achsfortsätze 6 verschiebbar sind. Die Achsfortsätze ragen bei diesem Klemmkörper durch im Gehäuse - schräg angestellte Führungsschlitze 20 nach außen, wo die üblichen Handscheiben 10, 10' aufgesetzt sein können. Die Längsbohrung 2 erstreckt sich in diesem Fall für die Aufnahme eines geradlinig gestreckten Seiles durch die ganze Länge des Gehäuses. Eine aufgesetzte Bohrungserweiterung dient zur Aufnahme der eigentlichen Klemmvorrichtung. In Fig. 8a befindet sich der Klemmkörper 45 in Klemmstellung, d.h. der Klemmkörper drückt mit seinem Kopf 45' sowie auch mit dem abgestuften Zwischenstück 45″ auf das Seil, weil er um die Achsfortsätze 6 gekippt und daher mit erweitertem Bereich an das Seil angedrückt ist. Werden die Achsfortsätze zum Lösen des Seiles entlang der Schrägschlitze 20 zurück- und dadurch nach oben gezogen, dann verschieben sie sich auch im Kippschlitz 46 des Klemmkörpers nach hinten und heben dabei das Klemmkörperende an und vom Seil ab (Fig. 8b). Diese Kippstellung wird durch den Kippschlitz 46 bewirkt, der zu diesem Zweck in entsprechender Anordnung im Klemmkörper ausgebildet ist. Der Klemmkörper 45 mit den ihn durchdringenden Achsfortsätzen ist in Fig. 8c vergrößert dargestellt.

Die Fig. 9 zeigt eine Klemmvorrichtung mit einem Klemmkörper gemäß den Figuren 8a bis 8c, wobei das Seil jedoch durch eine Schrägbohrung 15 geführt ist. Die Achsfortsätze 6 sind wieder in zur Längsbohrung parallelen Führungsschlitzen 27 geführt. Werden die Achsfortsätze 6 aus der Klemmstellung gemäß Fig. 9 nach hinten verschoben, dann verschieben sie sich auch im Kippschlitz 46 und bewirken ein Zurückkippen des Klemmkörpers, so daß dann nur noch der kugelförmige Kopf am Seil anliegt und nach einem weiteren Zurückschub das Seil vollständig frei ist. Die konisch gewickelte Druckfeder 4 kann dieser Kippbewegung des Klemmkörpers ohne weiteres folgen.

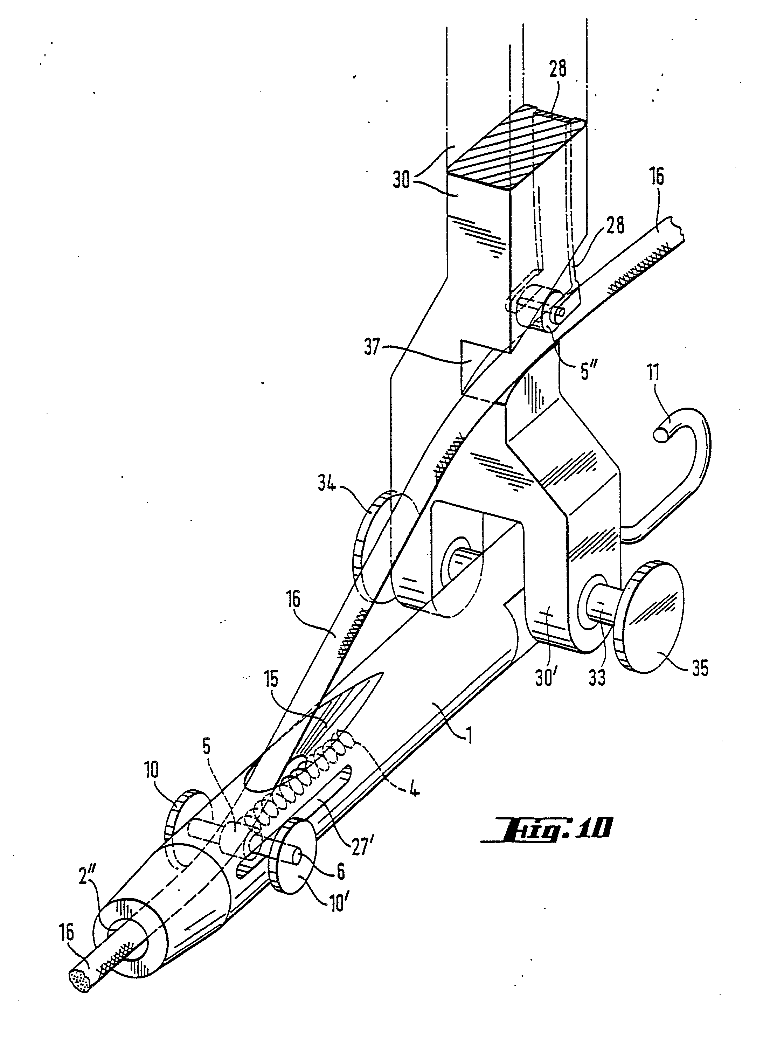

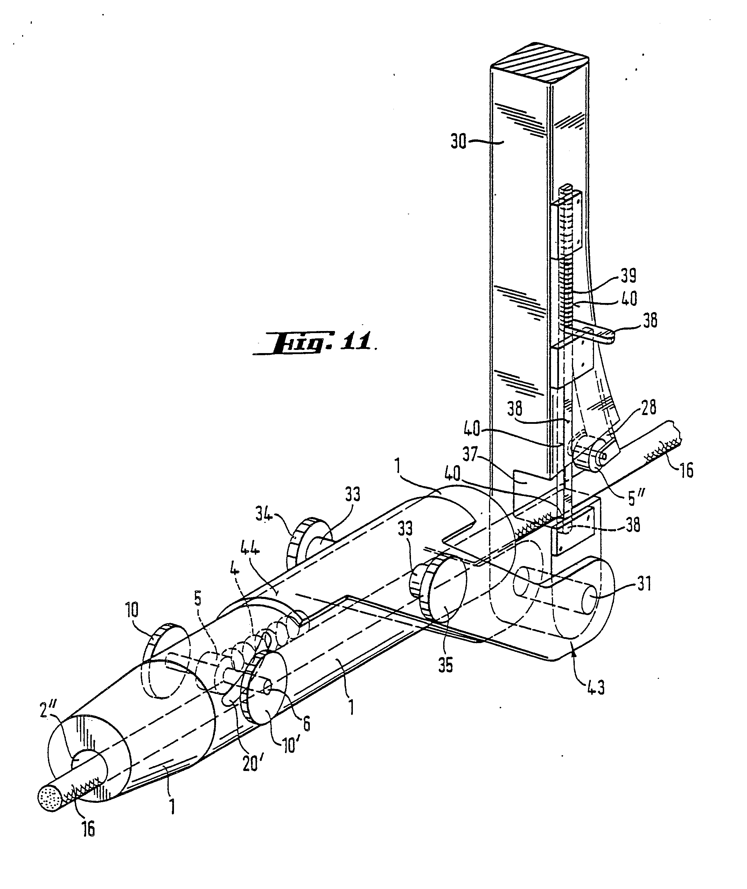

In Fig. 10 ist eine Klemmvorrichtung mit einer Nachspanneinrichtung dargestellt. Diese Nachspanneinrichtung ist mit dem gabelförmig ausgebildeten Ende 30' des Spannhebels 30 am Gehäuse 1 der Klemmvorrichtung befestigt, und zwar mittels des gefederten Bolzens 33 am einen Gabelzinken sowie einer Schraube 34 am anderen Zinken. Sowohl der Bolzen 33 sowie die Schraube 34 tragen zur Erleichterund der Bedienung Rändelscheiben 35. Die Schraube 34 wird nach einem bestimmten Durchmesser der dickwandigen Hülse 1 eingestellt. Nach Zurückziehen des Bolzens setzt man das gabelförmige Ende des Hebels auf die Hülse auf und läßt dann die Schraube und den Bolzen in die entsprechenden Bohrungen im Hülsenmantel einschnappen. Das durch die Klemmvorrichtung geführte und vom Klemmkörper 5 erfaßte Seil 16 ist in einen Schlitz 37 des Spannhebels eingelegt. Zur selbstsperrenden Verklemmung ist im Schlitz ein Klemmkörper 5″ vorgesehen, welcher unter der Wirkung einer Blattfeder 28 steht. Die vom Klemmkörper 5″ und der Feder 28 gebildete Klemmeinrichtung arbeitet genau entgegengesetzt wie die Klemmeinrichtung in der Hülse 1, d.h. bei der Hin- und Herbewegung des Spannhebels 30 ist jeweils die eine Klemmeinrichtung im Eingriff, während die andere aus ihrer Selbstsperrung sich löst. Damit das Seil nicht aus dem Schlitz 37 herausgleitet und auch zum Schutz des Klemmkörpers 5″ kann, wie beispielsweise in Fig. 11, ein Sicherungsschieber (nicht gezeichnet) vorgesehen sein. Zum Abspannen oder Nachspannen des Seiles 16 wird der Spannhebel 30 in die in der Zeichnung dargestellte Wirkstellung gebracht. Das Seil wird in den Schlitz 37 eingelegt und darin verklemmt. Durch die Kraftübersetzung beim Schwenken des Hebels kann das Seil besonders leicht nachgespannt werden.

In Fig. 11 ist eine Klemmvorrichtung mit einem geradlinigen Seildurchzug und einem in ansteigenden Schrägschlitzen 20' geführten Klemmkörper 5 mit einer Nachspannvorrichtung 30 kombiniert. Die Verbindung erfolgt mittels einer Abstützschale 44 mit Lenkergabel 43, die am Gehäuse 1 durch die Schraube und Bolzen 33 angeschraubt ist. Das Gabelende 43 ist über den Lagerbolzen 31 - schwenkbar mit dem Hebelende verbunden. Zum Festklemmen des in den Seitenschlitz 37 des Spannhebels eingelegten Seiles dient eine Klemmrolle 5", die durch eine Blattfeder 28 an das Seil angedrückt wird.

Mittels eines Sicherungsschiebers 38, der durch eine Feder 39 druckbelastet ist, kann die Spannstellung gesichert und der Sicherungsschieber 38 in einer Nut 40 im Spannhebelgehäuse in Stellung gebracht werden, so daß das Seil seitlich nicht austreten kann. Die Betätigung und Wirkungsweise dieser Spannvorrichtung vollzieht sich wie vorbeschrieben.

## Ansprüche

1. Vorrichtung zum lösbaren Klemmen, Nachspannen und Sichern von Seilen, Kabeln, Drähten, Riemen od.dgl., mit einem dickwandigen Gehäuse mit einer in Achsrichtung verlaufenden Längsbohrung od.dgl. Ausnehmung, in welcher ein federbelasteter Klemmkörper axial verschiebbar geführt ist, mit einer weiteren Schrägbohrung im Gehäuse, die in Schrägstellung in die Längsbohrung einmündet und mit einer durch das Gehäuse hindurchgreifenden Handhabe zum Verschieben des Klemmkörpers, wobei dieser Klemmkörper das durch die Stirnöffnung der Längsbohrung eingeführte und durch die Schrägbohrung austretende Seil selbstsperrend in der Längsbohrung verklemmt, dadurch gekennzeichnet, daß der Klemmkörper (5, 9, 45) an gegenüberliegenden Seiten je einen Achsfortsatz (6, 9') aufweist, im Gehäuse (1) gegenüberliegende Führungsschlitze (27, 20) zur Führung dieser Achsfortsätze ausgebildet sind und die Enden der Achsfortsätze über das Gehäuse hinausstehende Handhaben bilden.

2. Vorrichtung nach Anspruch 1, dadurch gekennzeichnet, daß die Handhaben an den Achsfortsätzen (6) Handscheiben (10, 10') sind.

3. Vorrichtung nach Anspruch 1 oder 2, dadurch gekennzeichnet, daß der Klemmkörper (5''') Kugelform aufweist.

4. Vorrichtung nach Anspruch 1 oder 2, dadurch gekennzeichnet, daß die Längsbohrung (2) eine Ausnehmung mit rechteckigem Querschnitt und der Klemmkörper eine Rolle (9) ist.

5. Vorrichtung nach Anspruch 4, dadurch gekennzeichnet, daß die Stirnflächen der Klemmkörper-Rolle (9) an den anliegenden Innenwänden der Ausnehmung (2) geführt sind.

6. Vorrichtung nach einem der Ansprüche 1 bis 5, dadurch gekennzeichnet, daß mindestens ein Führungsschlitz (27') an seinem hinteren Ende eine Montageöffnung (27") zum Durchstecken des Klemmkörpers aufweist.

7. Vorrichtung nach einem der Ansprüche 1 bis 5, dadurch gekennzeichnet, daß der Klemmkörper aus zwei durch ein Lagerteil (3) hintereinanderliegend verbundenen Rollen (5, 5') besteht, wobei der Durchmesser der vorderen Rolle (5') in Abhängigkeit ihrer Vorverlagerung kleiner ist und die Achsfortsätze (6) an der größeren Rolle (5) vorgesehen sind.

8. Vorrichtung nach einem der Ansprüche 1 bis 7, dadurch gekennzeichnet, daß die Druckfeder (4) unmittelbar am Klemmkörper angreift.

9. Vorrichtung nach einem der Ansprüche 1 bis 8, dadurch gekennzeichnet, daß die Druckfeder (4) zu ihren beiden Enden hin sich konisch verkleinernde Schraubenwindungen aufweist.

10. Vorrichtung nach einem der Ansprüche 1 bis 9 mit einer Längsbohrung mit seitlichem Einführschlitz und einem auf dem Gehäuse gewindegünig drehbaren Sicherungsring zum Abschließen des Einführschlitzes, dadurch gekennzeichnet, daß der Klemmkörper eine Rolle (5) mit konkav vertiefter Umfangsfläche ist und die Achsfortsätze (6) in einem Lagerteil (3) der Rolle gelagert sind.

11. Vorrichtung nach einem der Ansprüche 1 bis 10, dadurch gekennzeichnet, daß die auf die Achsfortsätze aufgesetzten Handhaben Flügelform aufweisen.

12. Vorrichtung nach einem der Ansprüche 1 bis 11, dadurch gekennzeichnet, daß der Klemmkörper (45) aus einem etwa halbkugelförmigen Kopf (45'), einem abgestuften Zwischenteil (45"), einem Halsstück (45"') und einer Endkugel (45"") besteht und im Klemmkörper ein Kippschlitz (46) vorgesehen ist, in dem die Achsfortsätze (6) verschiebbar sind, um den Klemmkörper zum Klemmen oder Lösen zu kippen.

13. Vorrichtung nach Anspruch 12, dadurch gekennzeichnet, daß die Führungsschlitze (20) in den Gehäuseseiten in Richtung Lösestellung - schräg ansteigen und die Längsbohrung (2) sich zur Aufnahme eines geradlinig geführten Seiles (16) durch das ganze Gehäuse (1) erstreckt (Fig.8a, 8b).

14. Vorrichtung nach Anspruch 12, dadurch gekennzeichnet, daß bei einer durch eine Schrägbohrung (15) geführten Seilführung die im Kippschlitz (46) des Klemmkörpers (45) gelagerten Achsfortsätze (6) in den parallel zur Bohrungsachse verlaufenden Führungsschlitzen (27) geführt sind (Fig. 9).

15. Vorrichtung nach einem der Ansprüche 1 bis 14, dadurch gekennzeichnet, daß am Klemmgehäuse (1) eine Nachspanneinrichtung aus einem Spannhebel (30) lösbar befestigt ist, in dessen Aufnahmeschlitz (37) für das zu spannende Seil (16) eine Klemmrolle (5″) vorgesehen ist, die durch eine Blattfeder (28) in Richtung Klemmstellung druckbelastet ist.

16. Vorrichtung nach Anspruch 15, dadurch gekennzeichnet, daß am Spannhebel (30) ein federbelasteter Sicherungsschieber (38) für das in den Schlitz (37) eingelegte Seil (16) vorgesehen ist.

*Fig. 1b*

*Fig. 1a*

EP 0 296 537 A2

**Fig. 2b**

**Fig. 2a**

**Fig. 3**

**Fig. 5**

**Fig. 4**

EP 0 296 537 A2

**Fig.6**

**Fig.7**

Fig. 8a

Fig. 8b

Fig. 8c

*Fig. 9*

EP 0 296 537 A2

*Fig. 10*

Fig. 11.